# EUROPEAN PATENT APPLICATION

(11) **EP 4 412 157 A1**
(43) Date of publication of application: **07.08.2024**
(21) Application number: 24153767.9
(22) Date of filing: 24.01.2024
(51) Int. Cl.: H04L 9/40, H04L 67/52, H04L 67/55

(54) **DISCOVERY OF INSTRUMENT-RELATED ASSETS AND TWO-WAY COMMUNICATION WITH THOSE ASSETS BETWEEN NETWORK ENVIRONMENTS**

(30) Priority: 31.01.2023 US 202363442355 P
(71) Applicant: Dionex Corporation, Sunnyvale, CA 94085 (US); Thermo Electron Scientific Instruments LLC, Madison WI 53711 (US); Dionex Softron GmbH, 82110 Germering (DE); Thermo Finnigan LLC, San Jose, CA 95134 (US)
(72) Inventor: BARON, Ronald S., San Jose (US); RAINA, Rajesh, Fremont (US); BURANGE, Sachin Suresh, Milpitas (US); KNEBELKAMP, Sven, Welden (DE); DOSHI, Manish V., San Jose (US)
(74) Representative: Boult Wade Tennant LLP

(57) **Abstract**

Systems and methods under the present disclosure can provide communication between instruments or resources at multiple locations. One example is a system of interconnection for various types of assets at multiple laboratories in different locations. Assets, devices, resources, or services at a location can multicast a beacon identifying itself. Verification of the asset, etc., can be done by communicating with a URI associated with that asset. Authentication of assets can be token-based to enable communication. Proxy servers at all or some of the locations can manage authentication and communication between locations and between assets. Tunnels can be implemented between different locations to help ensure secure communication.

## Description

### BACKGROUND

### Technical Field

This disclosure generally relates to enterprise network systems.

### Related Technology

Any type of enterprise can face challenges when trying to provide secure communications between devices and locations. An enterprise can expand across multiple locations, with various types of equipment including computers, servers, lab equipment, vehicles, printers, and more. One common problem involves fleet management and configuration, i.e., how does one know what devices and services are available to configure, how they are performing, whether or not they need maintenance, and more? One disfavored solution is network scanning. The Chromeleon approach is to configure a well-known publishing endpoint at the time of asset installation. This has the drawback that the asset is usually tightly coupled to its native ecosystem and must know how to talk to that endpoint. Integration of the asset into third party ecosystems then requires deployment of part of the native ecosystem and a bridge between the ecosystems. Some standards based working groups have proposed solutions, but these are usually narrowly focused on hardware discovery and do not cover for example UI components.

Another problem arises out of security concerns and IT restrictions. Often assets in a lab, for example, are prohibited from acting as servers, especially if the client process runs in the secure network zone (DMZ). IoT shadows attempt to solve some of this by ensuring that DMZ clients only make a request to shadow processes also in the DMZ, while the real asset is purely a client of the shadow e.g., to update its state and grab queued requests. However, this requires the assets to know how to reach their shadows. Also, this tends to lock the vendor into a specific IoT platform. Often the available TCP ports are limited to a well-known set. This restricts the ability to address a particular service or asset unless some mitigation is used. Chromeleon mitigated this via port-sharing and requiring a single port be opened by customer IT. Communications between the environments must be secured to prevent man-in-the-middle attacks and data exfiltration.

### BRIEF SUMMARY

One embodiment of the present disclosure comprises a system for implementing communication between one or more resources in one or more locations. The system comprises one or more resources, each of the one or more resources configured to multicast a beacon comprising one or more data; and one or more locations, each of the one or more locations containing at least one of the one or more resources. The system also comprises a registry service at each of the one or more locations configured to receive the multicast beacons and to verify each multicast beacon by communicating with a URI (uniform resource identifier) associated with the respective one of the one or more resources that multicast the beacon; and one or more tunnels configured to allow communication between the one or more resources at different of the one or more locations.

Another embodiment under the present disclosure comprises a method of registering one or more assets in one or more locations. The method comprises receiving, at a registry service, one or more beacons multicast by the one or more assets, the one or more beacons comprising one or more data; receiving, at the registry service, one or more URIs associated with the one or more assets; and verifying, by the registry service, the one or more assets by calling to the one or more URIs upon receiving the one or more beacons. It further comprises facilitating, by the registry service, communication between the one or more assets by providing the one or more data to a requesting resource, wherein the communication comprises a token-based authentication; and creating, by the registry service, one or more tunnels between the one or more locations to facilitate communication between one or more assets in different of the one or more locations.

A further embodiment under the present disclosure comprises a method of controlling one or more discoverable assets at one or more laboratories. The method includes receiving a list of the one or more discoverable assets from a first registry associated with a first of the one or more laboratories; presenting the list of one or more discoverable assets to a user; and receiving, from the user, a configuration. It further comprises controlling the one or more discoverable assets according to the configuration and via a tunnel; uploading UI (user interface) components into an inline frame; updating the UI components with notification events; and deploying at least one of the UI components in a Luna environment.

Another embodiment under the present disclosure is a method of operating a communication system for one or more discoverable assets in one or more laboratories. The method includes receiving, from a user, one or more sequences for the one or more discoverable assets with associated URIs; passing one or more sequences and associated URIs to one or more servers configured to operate the one or more discoverable assets; and creating a local file cache comprising the one or more sequences and associated URIs for use by one or more drivers configured to drive the one or more discoverable assets. It also includes configuring, by the one or more servers, a data collation service; retrieving, by the one or more servers, a channel ID; and coordinating, by the one or more servers, one or more actions for the one or more drivers. The method further includes streaming, by the one or more drivers, data to the data collation service that constructs a raw file; when the one or more drivers finish, completing, by the data collation service, the raw file; and uploading, by a data upload service, the completed file to a long term storage.

An additional embodiment includes a method of operating a communication system for one or more discoverable assets in one or more laboratories. The method includes subscribing, by a device monitoring service, to an instrument configuration; retrieving, by the device monitoring service, one or more URIs for the one or more discoverable assets associated with the instrument configuration; and subscribing, by the device monitoring service, to signature notifications. It further includes generating, by a driver, one or more signatures; sending, by the driver, the one or more signatures to one or more subscribers; relaying, by the device monitoring service, the one or more signatures to a long-term storage; and receiving, by the device monitoring service, a connection request from one of the one or more discoverable assets.

This summary is provided to introduce a selection of concepts in a simplified form that are further described below in the detailed description. This summary is not intended to identify key features or essential features of the claimed subject matter, nor is it intended to be used as an indication of the scope of the claimed subject matter.

The foregoing has outlined rather broadly the features and technical advantages of the present disclosure in order that the detailed description of the embodiments that follows may be better understood. Additional features and advantages of the disclosure will be set forth in the description which follows, and in part will be obvious from the description, or may be learned by the practice of the disclosure. The features and advantages of the disclosure may be realized and obtained by means of the instruments and combinations particularly pointed out in the appended claims. These and other features of the present disclosure will become more fully apparent from the following description and appended claims or may be learned by the practice of the disclosure as set forth hereinafter. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

Further aspects of the present disclosure as set forth in the following numbered clauses:-
Clause 1. A method of registering one or more assets in one or more locations, the method comprising:
   receiving, at a registry service, one or more beacons multicast by the one or more assets, the one or more beacons comprising one or more data;
   receiving, at the registry service, one or more URIs associated with the one or more assets;
   verifying, by the registry service, the one or more assets by calling to the one or more URIs upon receiving the one or more beacons;
   facilitating, by the registry service, communication between the one or more assets by providing the one or more data to a requesting resource, wherein the communication comprises a token-based authentication; and
   creating, by the registry service, one or more tunnels between the one or more locations to facilitate communication between one or more assets in different of the one or more locations. Clause 2. The method of clause 1, wherein the one or more data comprises at least one of: manufacturer; model, family, type, URI.
Clause 3. The method of clause 1, wherein the facilitating communication further comprises providing one or more APIs associated with a requested one of the one or more assets to a requesting service.
Clause 4. The method of clause 1, wherein the communication is preceded by an authentication step.
Clause 5. The method of clause 1, further comprising storing, by the registry service, the one or more data in a database.
Clause 6. The method of clause 1, further comprising storing, by the registry service, events in the system to an auditing system.
Clause 7. The method of clause 1, wherein the creating further comprises creating a proxy client in each tunnel to communicate with the one or more assets that are local and creating a proxy server configured to communicate with all proxy clients via tunnels and to communicate with the one or more assets that are not local.
Clause 8. The method of clause 7, wherein the proxy client transmits one or more data comprising the multicast beacon or authentication through a tunnel to be registered with the proxy server via API.
Clause 9. The method of clause 1, wherein the proxy client and proxy servers are configured to support caching and replay of messages in case of temporary network outages.
Clause 10. A method of controlling one or more discoverable assets at one or more laboratories, the method comprising:
   receiving a list of the one or more discoverable assets from a first registry associated with a first of the one or more laboratories;
   presenting the list of one or more discoverable assets to a user;
   receiving, from the user, a configuration;
   controlling the one or more discoverable assets according to the configuration and via a tunnel;
   uploading UI (user interface) components into an inline frame;
   updating the UI components with notification events; and
   deploying at least one of the UI components in a local environment.
Clause 11. The method of clause 10, wherein the one or more discoverable assets comprise at least one of: hardware, software, database, and server.
Clause 12. A method of operating a communication system for one or more discoverable assets in one or more laboratories, the method comprising:
   receiving, from a user, one or more sequences for the one or more discoverable assets with associated URIs;
   passing one or more sequences and associated URIs to one or more servers configured to operate the one or more discoverable assets;
   creating a local file cache comprising the one or more sequences and associated URIs for use by one or more drivers configured to drive the one or more discoverable assets;
   configuring, by the one or more servers, a data collation service;
   retrieving, by the one or more servers, a channelID;
   coordinating, by the one or more servers, one or more actions for the one or more drivers;
   streaming, by the one or more drivers, data to the data collation service that constructs a raw file;
   when the one or more drivers finish, completing, by the data collation service, the raw file; and
   uploading, by a data upload service, the completed file to a long term storage.
Clause 13. A method of operating a communication system for one or more discoverable assets in one or more laboratories, the method comprising:
   subscribing, by a device monitoring service, to an instrument configuration;
   retrieving, by the device monitoring service, one or more URIs for the one or more discoverable assets associated with the instrument configuration;
   subscribing, by the device monitoring service, to signature notifications;
   generating, by a driver, one or more signatures;
   sending, by the driver, the one or more signatures to one or more subscribers;
   relaying, by the device monitoring service, the one or more signatures to a long-term storage; and
   receiving, by the device monitoring service, a connection request from one of the one or more discoverable assets.

### BRIEF DESCRIPTION OF THE DRAWINGS

In order to describe the manner in which the above recited and other advantages and features of the disclosure can be obtained, a more particular description of the disclosure briefly described above will be rendered by reference to specific embodiments thereof, which are illustrated in the appended drawings. It is appreciated that these drawings depict only typical embodiments of the disclosure and are not therefore to be considered to be limiting of its scope. The disclosure will be described and explained with additional specificity and detail through the use of the accompanying drawings in which:
FIG. 1 illustrates a system embodiment under the present disclosure;
FIG. 2 illustrates a method embodiment under the present disclosure;
FIG. 3 illustrates a one PC model under the present disclosure;
FIG. 4 illustrates a small network model under the present disclosure;
FIG. 5 illustrates a managed cloud model under the present disclosure;
FIG. 6 illustrates a SaaS/Connect model under the present disclosure;
FIG. 7 illustrates several deployment scenarios under the present disclosure;
FIG. 8 illustrates a system embodiment schematic under the present disclosure;
FIG. 9 illustrates a system embodiment schematic under the present disclosure;
FIG. 10 illustrates a system embodiment schematic under the present disclosure;
FIG. 11 illustrates a system embodiment schematic under the present disclosure;
FIG. 12 illustrates a process flow embodiment for URI mapping under the present disclosure;
FIG. 13 illustrates process flow embodiment for a network failure use case under the present disclosure;
FIG. 14 illustrates a method embodiment under the present disclosure;
FIG. 15 illustrates a method embodiment under the present disclosure; and
FIG. 16 illustrates a method embodiment under the present disclosure.

### DETAILED DESCRIPTION

Before describing various embodiments of the present disclosure in detail, it is to be understood that this disclosure is not limited to the parameters of the particularly exemplified systems, methods, apparatus, products, processes, and/or kits, which may, of course, vary. Thus, while certain embodiments of the present disclosure will be described in detail, with reference to specific configurations, parameters, components, elements, etc., the descriptions are illustrative and are not to be construed as limiting the scope of the claimed invention. In addition, the terminology used herein is for the purpose of describing the embodiments and is not necessarily intended to limit the scope of the claimed invention.

Embodiments of the present disclosure include systems and methods for implementing communications between disparately located laboratories and between instruments or resources located at each laboratory. The present disclosure can include systems and methods for interconnecting instruments and resources in various types of enterprise or similar situations, not solely laboratories.

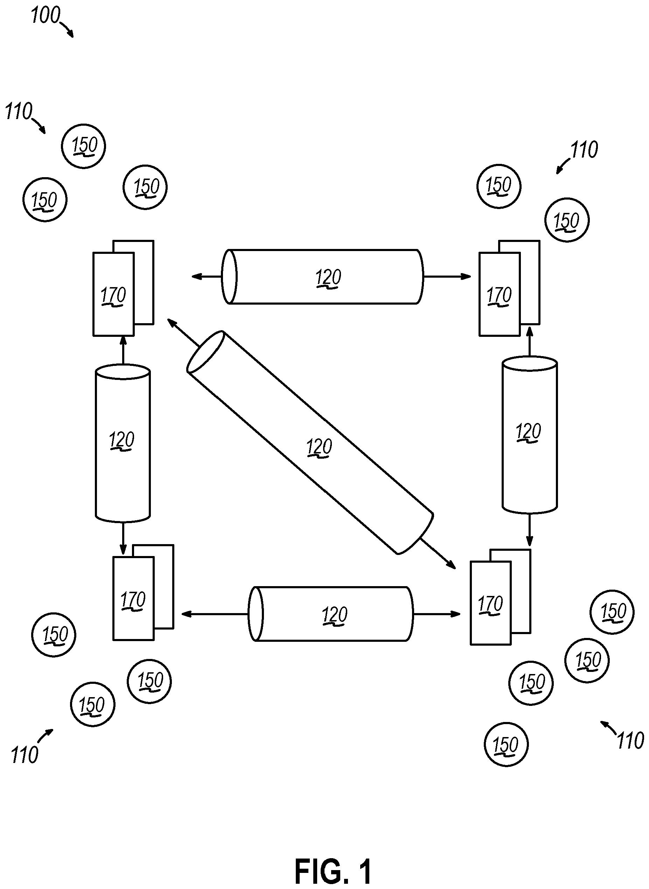

A system embodiment under the present disclosure is shown in Figure 1. System 100 comprises four locations 110 (but it could be any number of locations). Each location could comprise a laboratory, office, server farm, or other type of location. At each location 110, there are multiple assets 150. Assets 150 can comprise instruments or devices such as testing equipment (such as fluorometers, spectrophotometers, etc.), printers, refrigerators, computers, servers, software running on a device, databases, or other types of devices, hardware or software. Not every asset needs to be a physical device. Software code performing certain tasks can comprise an asset. Assets 150 can also be referred to as resources in certain embodiments. Each location 110 comprises a registry service 170. Registry service 170 can comprise one or more servers or other computing devices. Each asset 150 preferably is configured to multicast a beacon identifying itself or containing other data. The beacons multicast by the assets 150 can comprise various data. Included data can comprise one or more of: manufacturer; model, family, type, URI, or other data. Assets 150 can e.g., comprise devices or software that are collecting, generating, storing, sharing or otherwise manipulating data. For example, one asset 150 could be a computer running a simulation to collect test data. An asset can be running a series of test on a testing assay of fluid samples. Sample run and data acquisition may be ongoing, and it may be desired for data to be in continuous or periodic transit to other local or remote assets 150 or locations 110.

The registry service 170 at each of the one or more locations 110 can be configured to receive the multicast beacons and to verify each multicast beacon by communicating with a URI (uniform resource identifier) associated with the respective asset that multicast the beacon. Authentication in system 100 is preferably token-based. One example would be an OAuth2 compliant service.

The registry service 170 can be configured to facilitate communication between any capable asset 150 at a first location 110 and another capable asset 150 at the first location 110 or another location 110 by providing one or more APIs (application programming interfaces) associated with a requested asset 150 to a requestor. The requestor could be another asset 150 or another device or resource inside or outside of system 100. Registry service 170 preferably stores the data received in multicast beacons and can comprise a database to store such information. In some embodiments the registry service is further configured to record events in the system to an auditing system.

Tunnels 120 preferably connect each location 110 to each other location 110 and can be configured to allow communication between the one or more assets 150 at different of the one or more locations 110. Tunnels 120 can comprise a proxy client (local) and proxy server (remote) serving each location 110. The tunnels 120 help to implement communication between different locations 110. In preferred embodiments, data from the registry service 170 from the multicast beacon and URI communication can be sent through a tunnel 120 and registered with the remote registry service 170 via API. In certain embodiments, the proxy client and server can be configured to support caching and replay of messages in case of temporary network outages.

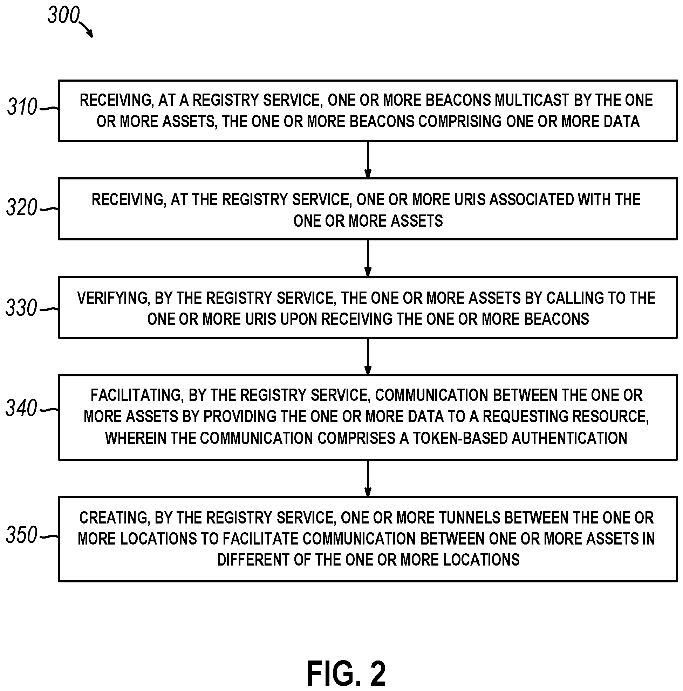

Figure 2 illustrates a possible method embodiment under the present disclosure. Method 300 is a method of registering one or more assets in one or more locations. The method can comprise, at step 310, receiving, at a registry service, one or more beacons multicast by the one or more assets, the one or more beacons comprising one or more data. Step 320 is receiving, at the registry service, one or more URIs associated with the one or more assets. Step 330 is verifying, by the registry service, the one or more assets by calling to the one or more URIs upon receiving the one or more beacons. Step 340 is facilitating, by the registry service, communication between the one or more assets by providing the one or more data to a requesting resource, wherein the communication comprises a token-based authentication. Step 350 is creating, by the registry service, one or more tunnels between the one or more locations to facilitate communication between one or more assets in different of the one or more locations.

Method 300 can comprise a variety of additional steps or variations. The one or more data can comprise at least one of: manufacturer; model, family, type, URI, or something else. The facilitating communication can further comprise providing one or more APIs associated with a requested one of the one or more assets to a requesting resource or asset, from within or outside the system. An additional step can comprise storing, by the registry service, the one or more data in a database. Another additional step can be storing, by the registry service, events in the system to an auditing system. In some embodiments the creating can further comprise creating a proxy client in each tunnel to communicate with the one or more assets that are local and creating a proxy server in each tunnel to communicate with the one or more assets that are not local. In some embodiments the proxy client and proxy servers are configured to support caching and replay of messages in case of temporary network outages. In some embodiments the proxy client can transmit multicast beacon and handshake data to the proxy servers and they are registered on the proxy server side via API.

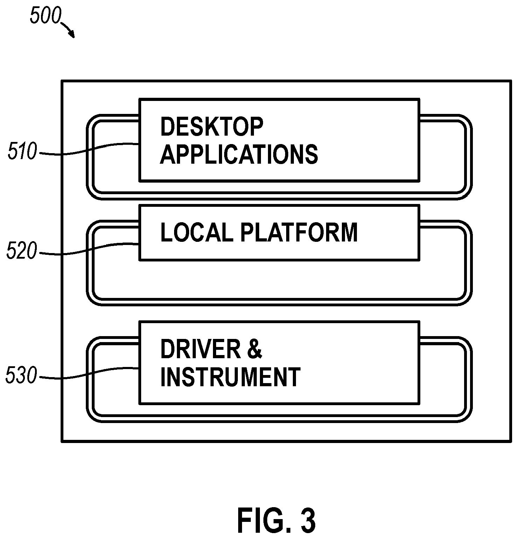

Figures 3-6 illustrate several different embodiments under the present disclosure. Each Figure 3-6 illustrate a local deployment of the certain embodiments described hereunder, with optional cloud or distributed deployments in certain embodiments. One feature of certain embodiments is the ability to share data across multiple devices or resources in a laboratory/office and/or across multiple laboratories/offices.

Figure 3 illustrates a one PC model. In this embodiment, a PC 500 comprises desktop applications 510, a local platform 520, and a driver and instrument 530. Driver and instrument 530 can comprise one of the resources or assets described in Figures 1 and 2. In Figure 3, the PC 500 comprises all three of the desktop applications 510, local platform 520, and driver and instrument 530. Because there is only one PC, it can comprise all the necessary components for testing or other functionalities. The local platform 520 preferably performs the following services: navigation, identity and authentication, audit, data storage and processing. PC 500 can comprise one or more assets 150 as shown in Figure 1.

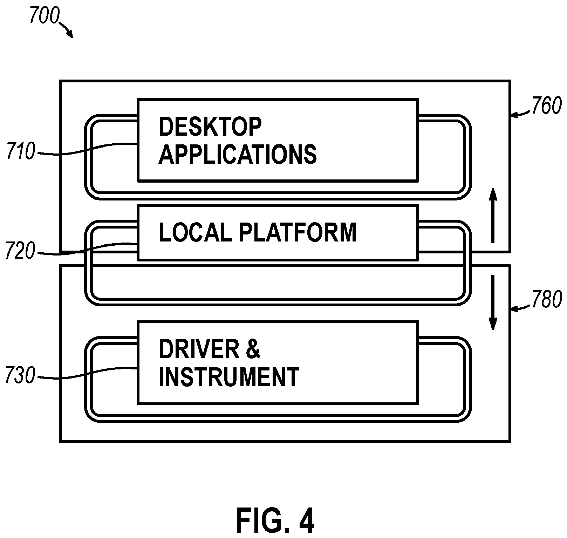

Figure 4 illustrates a small network model 700. In Figure 4, desktop applications 710 reside on device 760. Driver and instrument 730 reside on another device 780. Distributed platform 720 is distributed across devices 760, 780. Distributed platform 720 enables communication from device 760 to 780, such that data or other information held by device 760 can be used by driver and instrument 730 on device 780. Distributed platform 720 can preferably perform the same services as local platform 520 of Figure 3, such as: navigation, identity and authentication, audit, data storage and processing. Devices 760, 780 can each comprise one or more assets 150 of Figure 1.

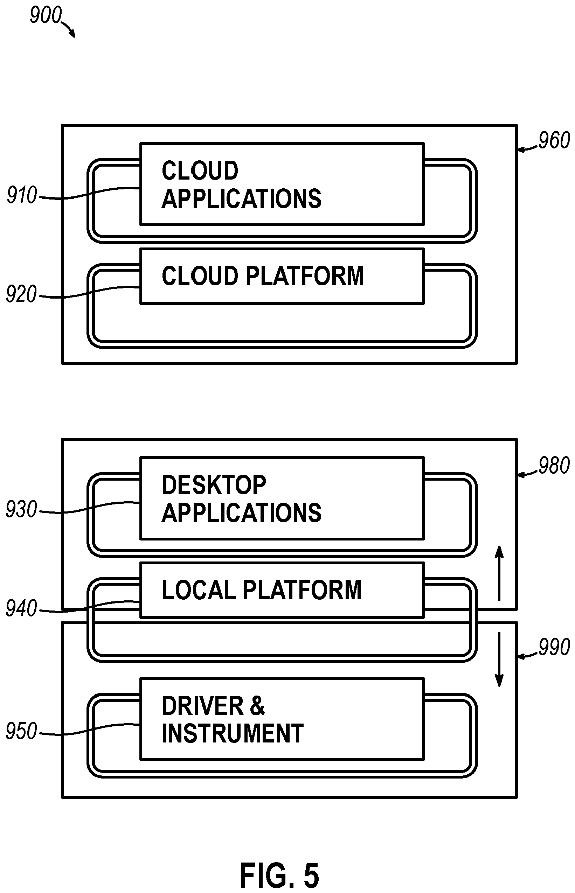

Figure 5 illustrates a managed cloud model 900. In Figure 5, model 900 has a cloud server 960, and two devices 980, 990. SaaS (software as a service) or cloud applications 910 and cloud platform 920 comprise cloud server 960. Device 980 comprises desktop applications 930 and a portion of a distributed platform 940. Device 990 comprises driver and instrument 950 and another portion of distributed platform 940. Distributed platform 940 can enable communication and sharing of data/information between device 980 and device 990. Distributed platform 940 can comprise a synchronized or non-synchronized version of cloud applications 910 and cloud platform 920 on cloud server 960 and can be updated from time to time. Cloud platform 960 can preferably perform the same services as local platform 520 of Figure 3, such as: navigation, identity and authentication, audit, data storage and processing. In Figure 5, cloud server 960 is shown connected to only devices 980, 990, but it can be connected to and provide services for multiple other devices. Cloud server 960 can comprise the registry service 170 of Figure 1. Devices 980, 990 can each comprise one or more assets 150 of Figure 1.

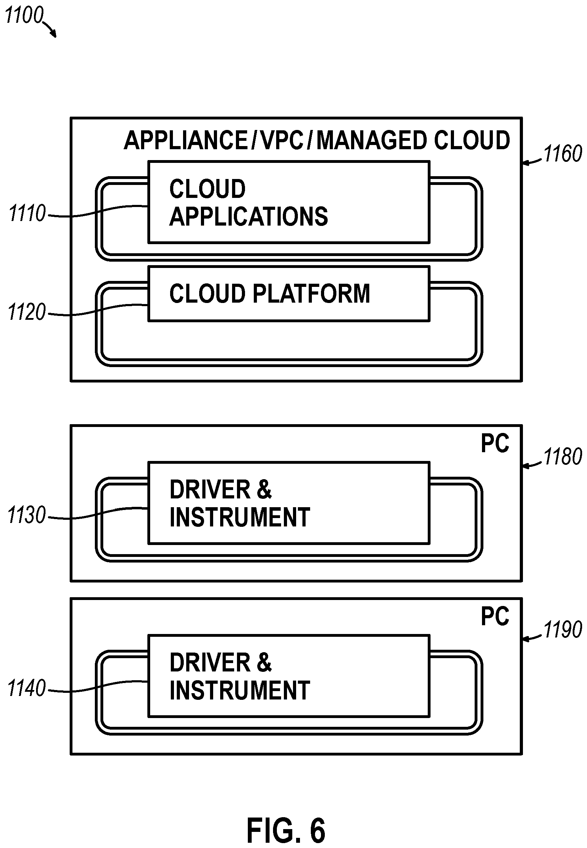

Figure 6 illustrates a SaaS/Connect model 1100. Model 1100 comprises cloud server 1160, and devices 1180, 1190. Cloud server 1160 comprises cloud applications 1110 and cloud platform 1120. Device 1180 is a driver & instrument 1130. Device 1190 is also a driver and instrument 1140. Cloud server 1160 can be located in the cloud and can comprise software and/or hardware, such as a server. In this embodiment devices 1180, 1190 may need to communicate with cloud server 1160 (and thereby cloud applications 1110 and cloud platform 1120) to obtain shared data or other information. This is in contrast to e.g., the embodiment of Figure 5, where devices 980, 990 can communicate directly with each other. Cloud platform 1120 can preferably perform the same services as local platform 520 of Figure 3, such as: navigation, identity and authentication, audit, data storage and processing. In Figure 6, cloud server 1160 is shown providing services to only devices 1180, 1190, but it can be connected to and provide services for multiple other devices. Cloud server 1160 can comprise the registry service 170 of Figure 1. Devices 1180, 1190 can each comprise one or more assets 150 of Figure 1.

For the embodiments shown in Figures 3-6, the cloud, distributed, or local platform can be available in any variety of deployment scenarios. Sample run and data acquisition should continue, even in cases of network failure. There is preferably sufficient replication of cloud assets/data available to an asset to continue running. Updated desktop applications should be able to connect to a shared data storage and extract the data needed for processing. It should be possible to move that data to the processing environment seamlessly, through speed can be network dependent. For remote drivers, which may be running on a separate PC or a computing device which is different from the instrument PC, they should have the ability to cache their data and retransmit after a network outage. For fast processing situations the system should preferably support local storage and local processing for faster turnaround, apart from eventual data lake storage and final processing. SaaS or cloud services such as identity, auditing, shared data storage, etc. are preferably available in all modes, through data storage will be limited in the small network. The drivers and driver packages are unaware of the presence or absence of the local, distributed or cloud platforms, or any other platform, instead just aware of token management for authentication.

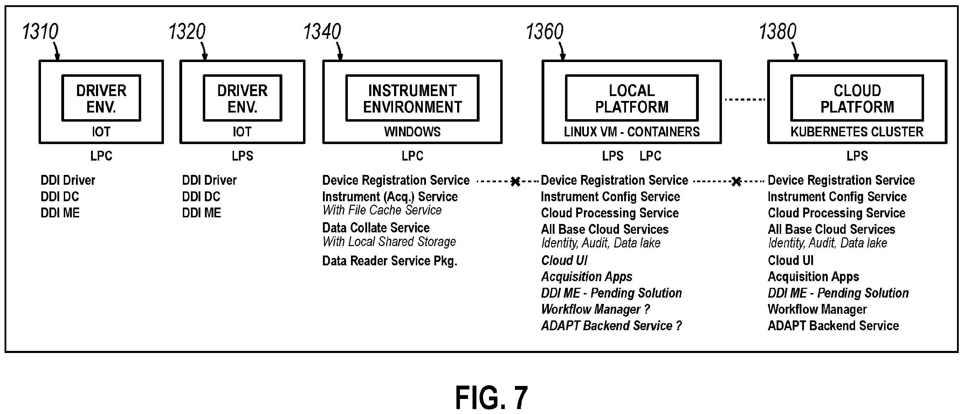

Figure 7 shows which services are preferably implemented at several possible components in a system embodiment under the present disclosure. The shown components are a driver environment 1310; a driver environment 1320 and an instrument environment 1340 in a Windows or PC deployment; a local platform 1360 deployed in a e.g., Linux environment; and an cloud platform 1380 deployed in a e.g., Kubernetes cluster. Instrument environment 1340 is analogous to the assets 150 of Figure 1. Cloud platform 1380 is analogous to registry service 170 of Figure 1. Local platform 1360 can be deployed across multiple assets 150 of Figure 1. In such deployments, it is preferred that only data assigned to the driver environment 1360 will be replicated. Furthermore, the file storage of the data collation service is preferably shared with a local processing service for IRC, AcquireX, or other resources. Multicast beacons can be handled by the device registration services that can be distributed across instrument environment 1340, local platform 1360, and cloud platform 1380. Device registration is preferably not replicated. The system can use instrument level file cache handling for local and remote drivers. Identity provider and registration service is configured at all layers. In addition, when the enterprise is active then all UI calls are directed to the cloud platform 1380.

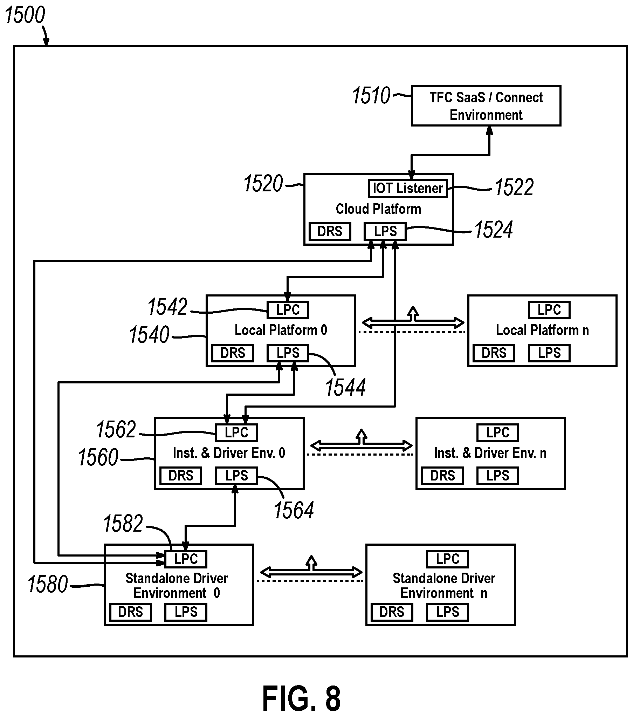

Figure 8 illustrates a deployment model for an embodiment under the present disclosure. In system 1500, SaaS/Connect environment 1510 can be coupled communicatively to cloud platform 1520 via IOT listener 1522. SaaS environment 1510 and cloud platform 1520 can be implemented at any registry service 170 of Figure 1. Proxy server 1524 communicates with 1 to n local platforms 1540, with 1 to n instrument and driver environments 1560, and with 1 to n standalone driver environments 1580. In each case the proxy server 1524 is coupled to a proxy client 1542, 1562, 1582. Each local platform 1540 also comprises a proxy server 1544 that is communicatively coupled to proxy clients 1562, 1582. Each instrument and driver environment 1560 also comprises a proxy server 1564 that is communicatively coupled to proxy client 1582. Communication and coupling are preferably provided via tunnels.

Tunnels (such as tunnels 120 of Figure 1) serving proxy clients 1542, 1562, 1582 can be setup initially driven by a YAML configuration, as part of installation. One network port that supports the tunnels should be opened. The proxy clients 1542, 1562, 1582 can be aware of and maintain multiple proxy server 1524, 1544, 1564 connections. Translated URIs can have local listeners on both the proxy client 1542, 1562, 1582 and proxy server 1524, 1544, 1564 side. Each DDI and instrument service broadcasts its root URI using the beacon. Each proxy client 1542, 1562, 1582 transmits the beacon on its tunnels to its connected proxy server 1544, 1564. Each proxy server environment registers the services via beacon listener REST API with the device registration service. The tunnel end points can handle REST, Webhooks, WebSocket and caching as needed. Device to device communication is handled via the shared proxy server 1524, 1544, 1564 and goes through an additional hop. If there are no port restrictions, the proxy client 1542, 1562, 1582 and proxy server 1524, 1544, 1564 should incur very limited or no additional processing. The IOT listener 1522 in the Luna enterprise environment can register the instruments in the global connected system.

Preferably, all drivers, driver UI services, instrument services and other devices or resources in system 1500 will publish their root discovery URI using a multicast beacon. This is intended for the device registration service. Device registration service can register all the device and instrument services. Proxy clients 1542, 1562, 1582 can receive these beacons and forward to one or more proxy servers 1524, 1544, 1564. Each such proxy server 1524, 1544, 1564 can modify the URI in the beacon to a proxy server URI (and maintain a mapping of original URI to proxy server URI); it will then broadcast the modified beacons in the cloud, local, or device environment 1520, 1540, 1560, where the registration service in that environment will be the listener.

The registration service uses the beacon URI to call back to the device/resource/service to get additional info and validate and/or authenticate the device, resource, or service. This additional info call includes a claim that the device/resource/service can check for the purpose of throttling back the beacon frequency (i.e., knowing it has reached n registration services). There is preferably no direct synchronization between registration services in different environments. On a proxy client/ proxy server pair (e.g., 1542, 1544) there is preferably a configuration option so that the communication between them is over e.g., RabbitMQ, WebSocket, or simple port forwarding or GRPC. The proxy clients 1542, 1562, 1582 preferably provide an option to cache data (e.g., ADAPT signatures, raw data, etc.) locally to provide guaranteed delivery to proxy servers 1824, 1544, 1564 in case of network outage. This option should be enabled in the context of standalone drivers (i.e., not local to the Data-Collate service).

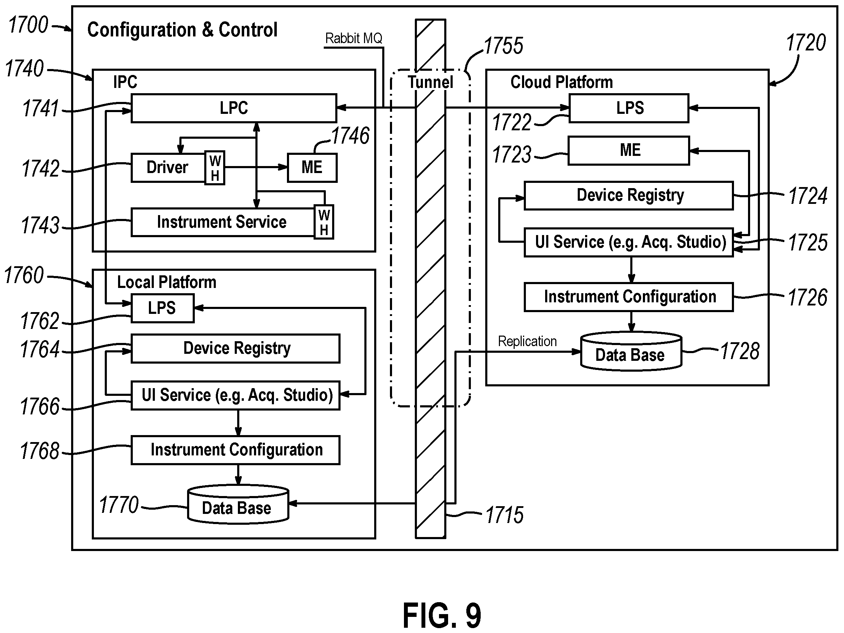

Figure 9 illustrates a schematic representation of a system 1700 embodying certain aspects of the present disclosure. In system 1700 a firewall 1715 separates a cloud platform 1720 from IPC (instrument PC) 1740, which are connected via a tunnel 1755. IPC 1740 comprises a proxy client 1741 which communicates with a driver 1742, ME 1746, and instrument service 1743. IPC 1740 also comprises, and proxy client 1741 is coupled to, local platform 1760 with a proxy server 1762. Local platform 1760 also comprises a device registry 1764, UI service 1766, instrument configuration 1768, and database (or storage, memory, or similar component) 1770 that can store registry data, device/resource information, instrument configuration, or other data. Cloud platform 1720 comprises a proxy server 1722, a ME 1723, device registry 1724, UI service 1725, instrument configuration 1726, and database (or storage, memory, or similar component) 1728 that can store registry data, device/resource information, instrument configuration, or other data. In certain situations, UI service 1766 or 1725 may get resources from the device registry 1764, 1724 and present them to a user. The user may create a configuration, which can then be replicated or synchronized across local platform 1760 and cloud platform 1720. The configuration may include a use, procedure, or other steps for control of a device, resource, instrument, or service, such as a testing device in a laboratory, or a printer in an office. Proxy server 1722 or 1762 can communicate with proxy client 1741 to implement the configuration and control a chosen e.g., testing device or other resource in the laboratory, via the instrument service 1743.

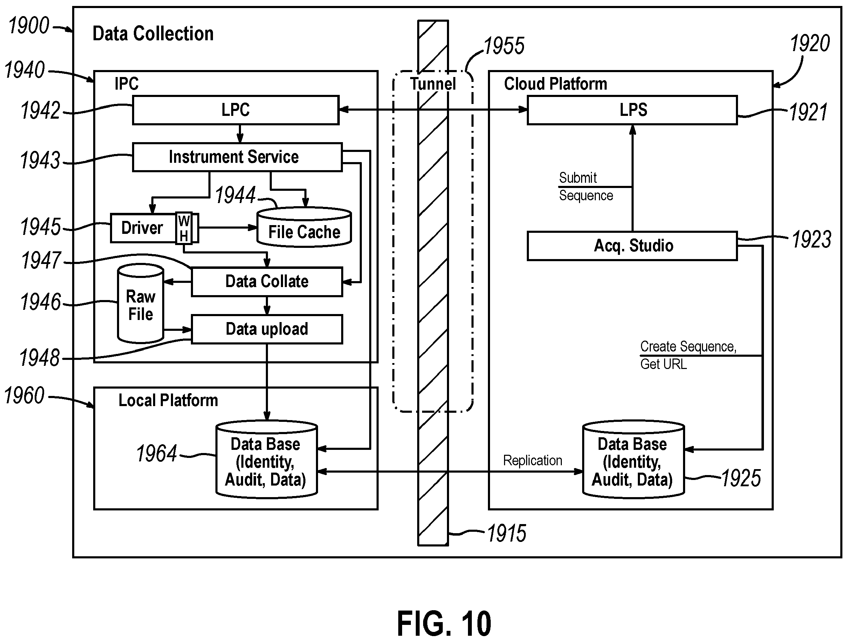

Figure 10 illustrates another system embodiment 1900. Cloud platform 1920 is coupled to an IPC 1940 across a firewall 1915 by a tunnel 1955. Cloud platform 1920 comprises a proxy server 1921 coupled to an Acq studio 1923, and database/storage 1925 that can store identity, audit, and other data. IPC 1940 comprises proxy client 1942 that communicates with instrument service 1943, file cache 1944, driver 1945, data collate 1947, raw file 1946, and data upload 1948. IPC 1940 also comprises local platform 1960 which has a database/storage 1964 with data such as identity, audit and other data. In one example of system 1900's functionality, a user can create sequences, methods and other configurations with proxy client 1942 or proxy server 1921, which can obtain the associated URIs of any devices or resources in the configuration. This information (configuration and/or URIs) can be passed to the instrument service 1943 which can create a local file cache 1944 for use by the drivers 1945 and store a copy of the data items in the local platform 1960. Instrument service 1943 can then prepare a data collate and get a channel ID. The instrument service 1943 can start coordinating driver actions and give them relevant file cache 1944 locations. Drivers 1945 can stream data to local data collate services that construct the raw file 1946. When all drivers 1945 finish the data collate service completes the file and the data upload 1948 service puts in the local platform 1960. These data items can be replicated to the cloud platform 1920 and database 1925.

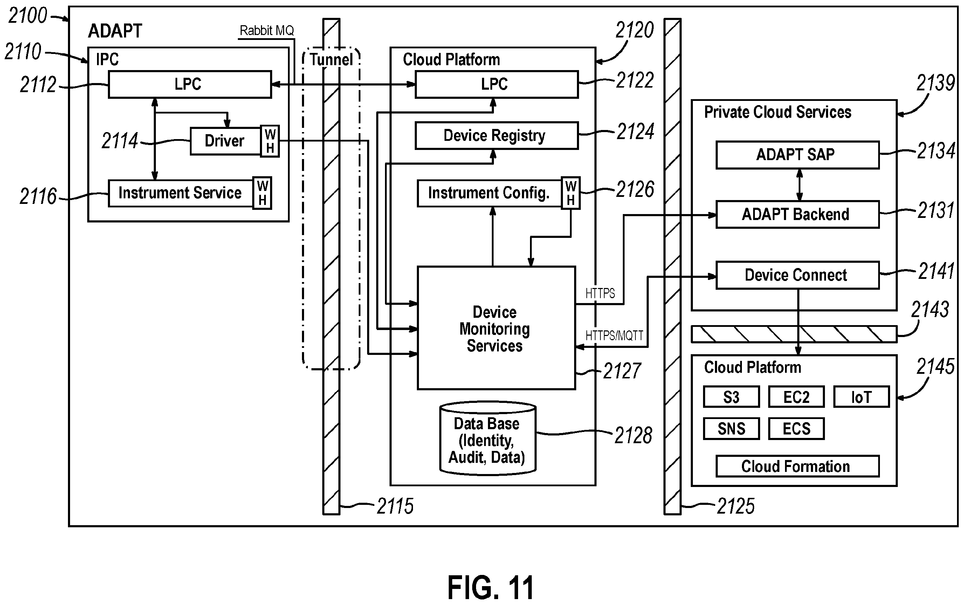

Figure 11 illustrates another system embodiment 2100. Cloud platform 2120 is coupled to IPC 2110 and private cloud services 2139 across firewalls 2115, 2125. IPC 2110 comprises proxy client 2112 coupled to driver 2114 and instrument service 2116. Cloud platform 2120 comprises proxy server 2122, device registry 2124, instrument configuration 2126 coupled to device monitoring services 2127 and core services 2128. Device monitoring service 2127 is coupled across firewall 2125 to long term storage 2131, which comprises private cloud services 2139 and is coupled to ADAPT SAP 2134. Private cloud services 2139 also comprises device connect 2141 which is coupled across firewall 2125 to device monitoring services 2127. Another firewall 2143 separates private cloud services 2139 from a third party cloud platform 2145, which can comprise a variety of services. In an example of system 2100 functionality, device monitoring services 2127 can subscribe to instrument configurations received from instrument service 2116. Information received from instrument service 2116 can include URIs for configured devices, resources, or services. Device monitoring services 2127 is also coupled to driver 2114 and can receive signatures therefrom. Device monitoring services 2127 can relay the signatures to long term storage 2131 using existing protocols and caches. Device monitoring services also communicates with device connect 2141 which can use this information to connect to cloud-based services on cloud platform 2145.

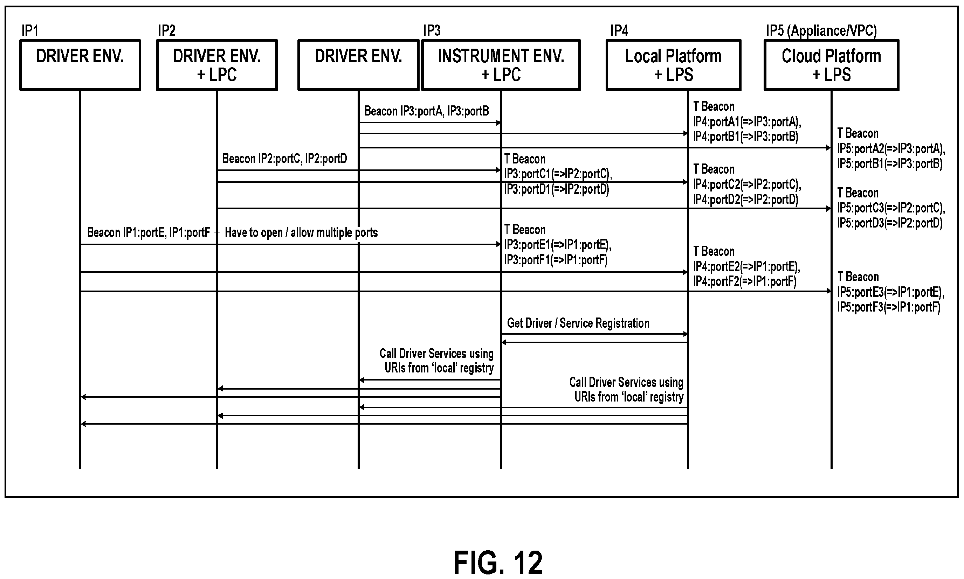

Figure 12 illustrates a process flow for the multicasting of beacons. As can be seen, any driver environment IP1 (e.g., a driver in a device, resource or service) can multicast a beacon, which may be received by a proxy client (LPC) or proxy server (LPS). The proxy client can be distributed across a driver environment IP2 and an instrument environment IP3. The proxy server can be distributed across a local platform IP4 and a cloud platform IP6. The proxy client can then receive driver or service registration information from a proxy server. Either the proxy client or the proxy server may call driver services using URIs.

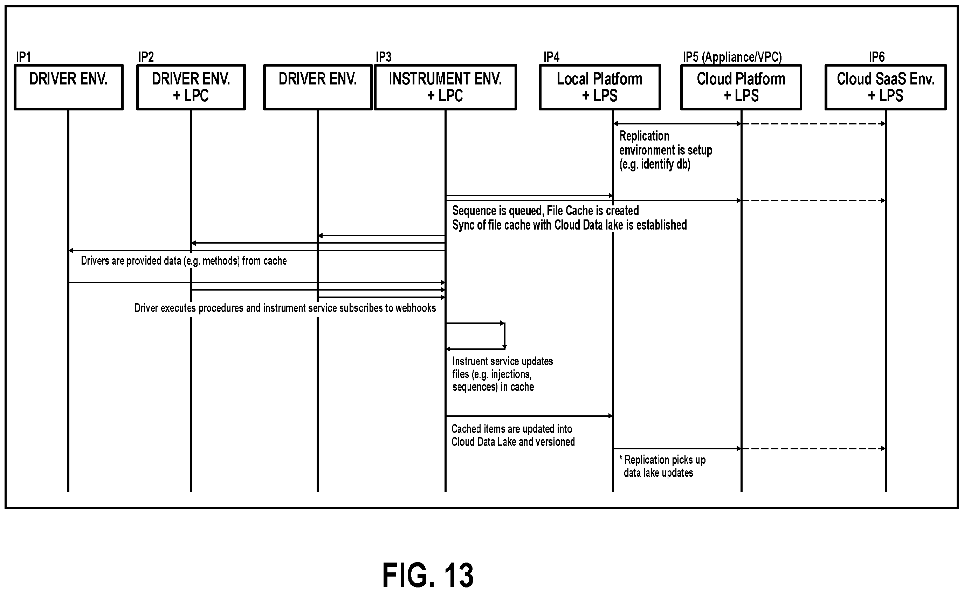

Figure 13 illustrates a process flow for a network failure use case. Replication can take place across the SaaS platform IP6, enterprise platform IP5, and local platform IP4 proxy servers (LPS). A sequence is queued and a file cache is created and sync of the file cache is established. Drivers at the driver environments located at IP1-IP3 are then provided data (e.g., methods, configurations). Drivers can then execute the methods or configurations and the instrument service can subscribe to Webhooks, which can then update files in the file cache. Cached items can then be updated into the local platform IP4 and the other platforms.

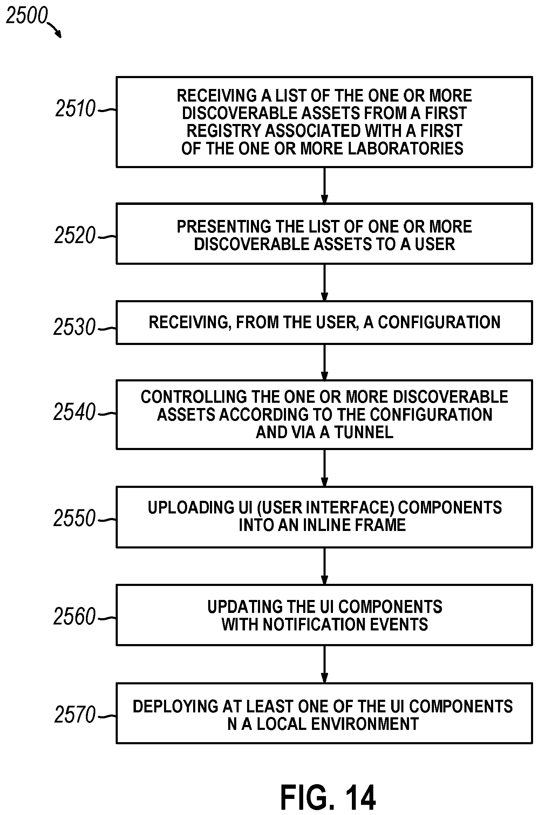

Figure 14 illustrates a possible method embodiment 2500 under the present disclosure. Method 2500 is a method of controlling one or more discoverable assets at one or more laboratories. Step 2510 is receiving a list of the one or more discoverable assets from a first registry associated with a first of the one or more laboratories. Step 2520 is presenting the list of one or more discoverable assets to a user. Step 2530 is receiving, from the user, a configuration. Step 2540 is controlling the one or more discoverable assets according to the configuration and via a tunnel. Step 2550 is uploading UI (user interface) components into an inline frame. Step 2560 is updating the UI components with notification events. Step 2570 is deploying at least one of the UI components in a local environment. Method 2500 can comprise a variety of additional or alternative steps. Controlling the one or more assets can be performed via an API. The registry can list assets with one or more of the following data: manufacturer; model, family, type, URI. The registry may list an asset only after it has been authenticated. In some embodiments, the registries can be implemented in a cloud platform. The registry service can store the list in one or more databases. In some embodiments, the asset(s) and the user are in different locations.

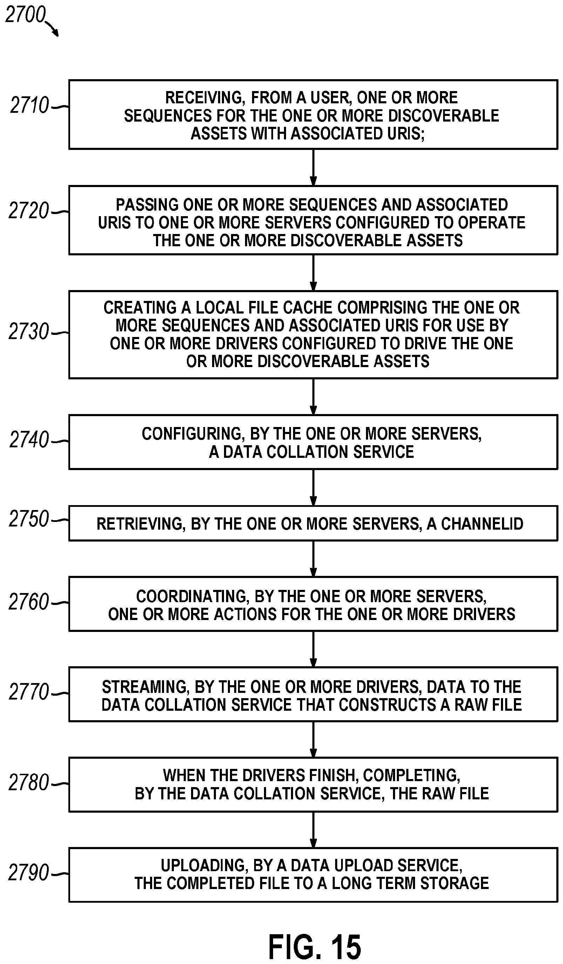

Another method embodiment is shown in Figure 15. Method 2700 is a method of operating a communication system for one or more discoverable assets in one or more laboratories. Step 2710 is receiving, from a user, one or more sequences for the one or more discoverable assets with associated URIs. Step 2720 is passing one or more sequences and associated URIs to one or more servers configured to operate the one or more discoverable assets. Step 2730 is creating a local file cache comprising the one or more sequences and associated URIs for use by one or more drivers configured to drive the one or more discoverable assets. Step 2740 is configuring, by the one or more servers, a data collation service. Step 2750 is retrieving, by the one or more servers, a channel ID. Step 2760 is coordinating, by the one or more servers, one or more actions for the one or more drivers. Step 2770 is streaming, by the one or more drivers, data to the data collation service that constructs a raw file. Step 2780 is, when the one or more drivers finish, completing, by the data collation service, the raw file. Step 2790 is uploading, by a data upload service, the completed file to a long term storage.

Method 2700 can comprise a variety of additional or alternative steps. The method can be performed by a local platform in some variation. It can be performed by a cloud platform in other variations. The local file cache and/or the completed file can be stored in a database at a local platform or at a cloud platform. The method can be performed at a single location or across multiple locations. Communication be at least partially performed via tunnels. The URIs, or other information, can have been received in a multicast beacon from the discoverable assets.

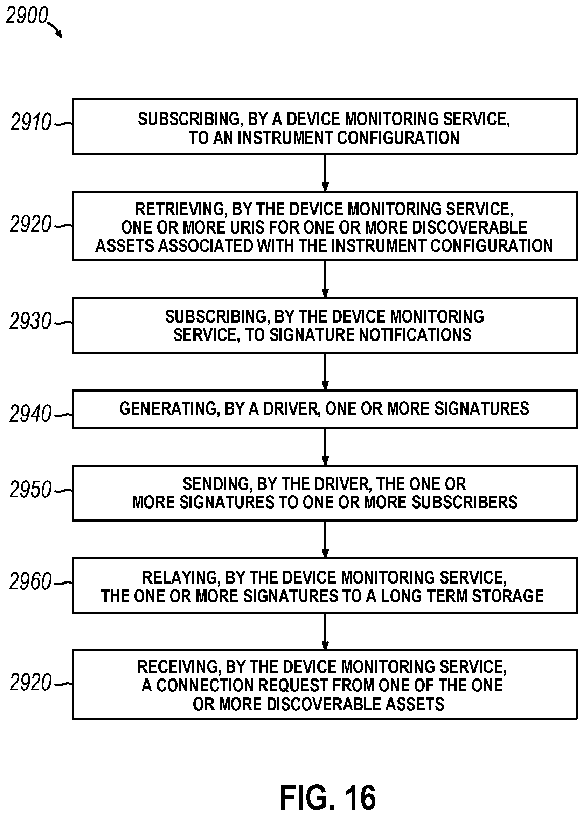

Another method embodiment is shown in Figure 16. Method 2900 comprises a method of operating a communication system for one or more discoverable assets in one or more laboratories. The method includes at 2910, subscribing, by a device monitoring service, to an instrument configuration. Step 2920 is retrieving, by the device monitoring service, one or more URIs for the one or more discoverable assets associated with the instrument configuration. Step 2930 is subscribing, by the device monitoring service, to signature notifications. It further includes generating, at step 2940, by a driver, one or more signatures. Step 2950 is sending, by the driver, the one or more signatures to one or more subscribers. Step 2960 is relaying, by the device monitoring service, the one or more signatures to a long-term storage. Step 2970 is receiving, by the device monitoring service, a connection request from one of the one or more discoverable assets.

Method 2900 can comprise a variety of additional or alternative steps. The instrument configuration can comprise API information for one or more of the discoverable assets. The long-term storage can comprise a local platform or a cloud platform or another component of a system.

### Computer Systems of the Present Disclosure

It will be appreciated that computer systems are increasingly taking a wide variety of forms. In this description and in the claims, the terms "controller," "computer system," or "computing system" are defined broadly as including any device or system-or combination thereof-that includes at least one physical and tangible processor and a physical and tangible memory capable of having thereon computer-executable instructions that may be executed by a processor. By way of example, not limitation, the term "computer system" or "computing system," as used herein is intended to include personal computers, desktop computers, laptop computers, tablets, hand-held devices (e.g., mobile telephones, PDAs, pagers), microprocessor-based or programmable consumer electronics, minicomputers, mainframe computers, multi-processor systems, network PCs, distributed computing systems, datacenters, message processors, routers, switches, and even devices that conventionally have not been considered a computing system, such as wearables (e.g., glasses).

The memory may take any form and may depend on the nature and form of the computing system. The memory can be physical system memory, which includes volatile memory, non-volatile memory, or some combination of the two. The term "memory" may also be used herein to refer to non-volatile mass storage such as physical storage media.

The computing system also has thereon multiple structures often referred to as an "executable component." For instance, the memory of a computing system can include an executable component. The term "executable component" is the name for a structure that is well understood to one of ordinary skill in the art in the field of computing as being a structure that can be software, hardware, or a combination thereof.

For instance, when implemented in software, one of ordinary skill in the art would understand that the structure of an executable component may include software objects, routines, methods, and so forth, that may be executed by one or more processors on the computing system, whether such an executable component exists in the heap of a computing system, or whether the executable component exists on computer-readable storage media. The structure of the executable component exists on a computer-readable medium in such a form that it is operable, when executed by one or more processors of the computing system, to cause the computing system to perform one or more functions, such as the functions and methods described herein. Such a structure may be computer-readable directly by a processor-as is the case if the executable component were binary. Alternatively, the structure may be structured to be interpretable and/or compiled-whether in a single stage or in multiple stages-so as to generate such binary that is directly interpretable by a processor.

The term "executable component" is also well understood by one of ordinary skill as including structures that are implemented exclusively or near-exclusively in hardware logic components, such as within a field programmable gate array (FPGA), an application specific integrated circuit (ASIC), Program-specific Standard Products (ASSPs), System-on-a-chip systems (SOCs), Complex Programmable Logic Devices (CPLDs), or any other specialized circuit. Accordingly, the term "executable component" is a term for a structure that is well understood by those of ordinary skill in the art of computing, whether implemented in software, hardware, or a combination thereof.

The terms "component," "service," "engine," "module," "control," "generator," or the like may also be used in this description. As used in this description and in this case, these terms-whether expressed with or without a modifying clause-are also intended to be synonymous with the term "executable component" and thus also have a structure that is well understood by those of ordinary skill in the art of computing.

While not all computing systems require a user interface, in some embodiments a computing system includes a user interface for use in communicating information from/to a user. The user interface may include output mechanisms as well as input mechanisms. The principles described herein are not limited to the precise output mechanisms or input mechanisms as such will depend on the nature of the device. However, output mechanisms might include, for instance, speakers, displays, tactile output, projections, holograms, and so forth. Examples of input mechanisms might include, for instance, microphones, touchscreens, projections, holograms, cameras, keyboards, stylus, mouse, or other pointer input, sensors of any type, and so forth.

Accordingly, embodiments described herein may comprise or utilize a special purpose or general-purpose computing system. Embodiments described herein also include physical and other computer-readable media for carrying or storing computer-executable instructions and/or data structures. Such computer-readable media can be any available media that can be accessed by a general purpose or special purpose computing system. Computer-readable media that store computer-executable instructions are physical storage media. Computer-readable media that carry computer-executable instructions are transmission media. Thus, by way of example-not limitation-embodiments disclosed or envisioned herein can comprise at least two distinctly different kinds of computer-readable media: storage media and transmission media.

Computer-readable storage media include RAM, ROM, EEPROM, solid state drives ("SSDs"), flash memory, phase-change memory ("PCM"), CD-ROM or other optical disk storage, magnetic disk storage or other magnetic storage devices, or any other physical and tangible storage medium that can be used to store desired program code in the form of computer-executable instructions or data structures and that can be accessed and executed by a general purpose or special purpose computing system to implement the disclosed functionality of the invention. For example, computer-executable instructions may be embodied on one or more computer-readable storage media to form a computer program product.

Transmission media can include a network and/or data links that can be used to carry desired program code in the form of computer-executable instructions or data structures and that can be accessed and executed by a general purpose or special purpose computing system. Combinations of the above should also be included within the scope of computer-readable media.

Further, upon reaching various computing system components, program code in the form of computer-executable instructions or data structures can be transferred automatically from transmission media to storage media (or vice versa). For example, computer-executable instructions or data structures received over a network or data link can be buffered in RAM within a network interface module (*e.g.,* a "NIC") and then eventually transferred to computing system RAM and/or to less volatile storage media at a computing system. Thus, it should be understood that storage media can be included in computing system components that also-or even primarily-utilize transmission media.

Those skilled in the art will further appreciate that a computing system may also contain communication channels that allow the computing system to communicate with other computing systems over, for example, a network. Accordingly, the methods described herein may be practiced in network computing environments with many types of computing systems and computing system configurations. The disclosed methods may also be practiced in distributed system environments where local and/or remote computing systems, which are linked through a network (either by hardwired data links, wireless data links, or by a combination of hardwired and wireless data links), both perform tasks. In a distributed system environment, the processing, memory, and/or storage capability may be distributed as well.

Those skilled in the art will also appreciate that the disclosed methods may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources (*e.g*., networks, servers, storage, applications, and services). The definition of "cloud computing" is not limited to any of the other numerous advantages that can be obtained from such a model when properly deployed.

A cloud-computing model can be composed of various characteristics, such as on-demand self-service, broad network access, resource pooling, rapid elasticity, measured service, and so forth. A cloud-computing model may also come in the form of various service models such as, for example, Software as a Service ("SaaS"), Platform as a Service ("PaaS"), and Infrastructure as a Service ("IaaS"). The cloud-computing model may also be deployed using different deployment models such as private cloud, community cloud, public cloud, hybrid cloud, and so forth.

### Abbreviated List of Defined Terms

To assist in understanding the scope and content of this written description and the appended claims, a select few terms are defined directly below. Unless defined otherwise, all technical and scientific terms used herein have the same meaning as commonly understood by one of ordinary skill in the art to which the present disclosure pertains.

The terms "approximately," "about," and "substantially," as used herein, represent an amount or condition close to the specific stated amount or condition that still performs a desired function or achieves a desired result. For example, the terms "approximately," "about," and "substantially" may refer to an amount or condition that deviates by less than 10%, or by less than 5%, or by less than 1%, or by less than 0.1%, or by less than 0.01% from a specifically stated amount or condition.

Various aspects of the present disclosure, including devices, systems, and methods may be illustrated with reference to one or more embodiments or implementations, which are exemplary in nature. As used herein, the term "exemplary" means "serving as an example, instance, or illustration," and should not necessarily be construed as preferred or advantageous over other embodiments disclosed herein. In addition, reference to an "implementation" of the present disclosure or invention includes a specific reference to one or more embodiments thereof, and vice versa, and is intended to provide illustrative examples without limiting the scope of the invention, which is indicated by the appended claims rather than by the following description.

As used in the specification, a word appearing in the singular encompasses its plural counterpart, and a word appearing in the plural encompasses its singular counterpart, unless implicitly or explicitly understood or stated otherwise. Thus, it will be noted that, as used in this specification and the appended claims, the singular forms "a," "an" and "the" include plural referents unless the context clearly dictates otherwise. For example, reference to a singular referent (*e.g.,* "a widget") includes one, two, or more referents unless implicitly or explicitly understood or stated otherwise. Similarly, reference to a plurality of referents should be interpreted as comprising a single referent and/or a plurality of referents unless the content and/or context clearly dictate otherwise. For example, reference to referents in the plural form (*e.g*., "widgets") does not necessarily require a plurality of such referents. Instead, it will be appreciated that independent of the inferred number of referents, one or more referents are contemplated herein unless stated otherwise.

As used herein, directional terms, such as "top," "bottom," "left," "right," "up," "down," "upper," "lower," "proximal," "distal," "adjacent," and the like are used herein solely to indicate relative directions and are not otherwise intended to limit the scope of the disclosure and/or claimed invention.

### Conclusion

It is understood that for any given component or embodiment described herein, any of the possible candidates or alternatives listed for that component may generally be used individually or in combination with one another, unless implicitly or explicitly understood or stated otherwise. Additionally, it will be understood that any list of such candidates or alternatives is merely illustrative, not limiting, unless implicitly or explicitly understood or stated otherwise.

In addition, unless otherwise indicated, numbers expressing quantities, constituents, distances, or other measurements used in the specification and claims are to be understood as being modified by the term "about," as that term is defined herein. Accordingly, unless indicated to the contrary, the numerical parameters set forth in the specification and attached claims are approximations that may vary depending upon the desired properties sought to be obtained by the subject matter presented herein. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the subject matter presented herein are approximations, the numerical values set forth in the specific examples are reported as precisely as possible. Any numerical values, however, inherently contain certain errors necessarily resulting from the standard deviation found in their respective testing measurements.

Any headings and subheadings used herein are for organizational purposes only and are not meant to be used to limit the scope of the description or the claims.

The terms and expressions which have been employed herein are used as terms of description and not of limitation, and there is no intention in the use of such terms and expressions of excluding any equivalents of the features shown and described or portions thereof, but it is recognized that various modifications are possible within the scope of the invention itemed. Thus, it should be understood that although the present invention has been specifically disclosed in part by preferred embodiments, exemplary embodiments, and optional features, modification and variation of the concepts herein disclosed may be resorted to by those skilled in the art, and such modifications and variations are considered to be within the scope of this invention as defined by the appended items. The specific embodiments provided herein are examples of useful embodiments of the present invention and various alterations and/or modifications of the inventive features illustrated herein, and additional applications of the principles illustrated herein that would occur to one skilled in the relevant art and having possession of this disclosure, can be made to the illustrated embodiments without departing from the spirit and scope of the invention as defined by the items and are to be considered within the scope of this disclosure.

It will also be appreciated that systems, devices, products, kits, methods, and/or processes, according to certain embodiments of the present disclosure may include, incorporate, or otherwise comprise properties or features (*e.g*., components, members, elements, parts, and/or portions) described in other embodiments disclosed and/or described herein. Accordingly, the various features of certain embodiments can be compatible with, combined with, included in, and/or incorporated into other embodiments of the present disclosure. Thus, disclosure of certain features relative to a specific embodiment of the present disclosure should not be construed as limiting application or inclusion of said features to the specific embodiment. Rather, it will be appreciated that other embodiments can also include said features, members, elements, parts, and/or portions without necessarily departing from the scope of the present disclosure.

Moreover, unless a feature is described as requiring another feature in combination therewith, any feature herein may be combined with any other feature of a same or different embodiment disclosed herein. Furthermore, various well-known aspects of illustrative systems, methods, apparatus, and the like are not described herein in particular detail in order to avoid obscuring aspects of the example embodiments. Such aspects are, however, also contemplated herein.

All references cited in this application are hereby incorporated in their entireties by reference to the extent that they are not inconsistent with the disclosure in this application. It will be apparent to one of ordinary skill in the art that methods, devices, device elements, materials, procedures, and techniques other than those specifically described herein can be applied to the practice of the invention as broadly disclosed herein without resort to undue experimentation. All art-known functional equivalents of methods, devices, device elements, materials, procedures, and techniques specifically described herein are intended to be encompassed by this invention.

When a group of materials, compositions, components, or compounds is disclosed herein, it is understood that all individual members of those groups and all subgroups thereof are disclosed separately. When a Markush group or other grouping is used herein, all individual members of the group and all combinations and sub-combinations possible of the group are intended to be individually included in the disclosure. Every formulation or combination of components described or exemplified herein can be used to practice the invention, unless otherwise stated. Whenever a range is given in the specification, for example, a temperature range, a time range, or a composition range, all intermediate ranges and subranges, as well as all individual values included in the ranges given are intended to be included in the disclosure. All changes which come within the meaning and range of equivalency of the items are to be embraced within their scope.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A system for implementing communication between one or more resources in one or more locations, comprising:
one or more resources, each of the one or more resources configured to multicast a beacon comprising one or more data;
one or more locations, each of the one or more locations containing at least one of the one or more resources;
a registry service at each of the one or more locations configured to receive the multicast beacons and to verify each multicast beacon by communicating with a URI (uniform resource identifier) associated with the respective one of the one or more resources that multicast the beacon; and
one or more tunnels configured to allow communication between the one or more resources at different of the one or more locations.

2. The system of claim 1, wherein the one or more data comprise at least one of: manufacturer; model, family, type, URI.

3. The system of claim 1, wherein the registry service is further configured to facilitate communication between the one or more resources by providing one or more APIs (application programming interfaces) associated with a requested one of the one or more resources to a requesting service.

4. The system of claim 3, wherein the requesting service comprises one of the one or more resources.

5. The system of claim 3, wherein the requesting service does not comprise one of the one or more resources.

6. The system of claim 3, wherein the communication is preceded by an authentication step.

7. The system of claim 6, wherein the authentication is token-based.

8. The system of claim 7, wherein the authentication comprises an OAuth2 compliant service.

9. The system of claim 1, wherein the registry service comprises a database and is configured to store the one or more data in the database.

10. The system of claim 1, wherein the registry service is further configured to record events in the system to an auditing system.

11. The system of claim 1, wherein a tunnel component at one of the one or more locations comprises a proxy client and a remote tunnel component at others of the one or more locations comprise proxy servers.

12. The system of claim 11, wherein the proxy client transmits one or more data comprising the multicast beacon or authentication through a tunnel to be registered with the proxy server via API.

13. The system of claim 11, wherein the tunnel component and remote tunnel component are configured to support caching and replay of messages in case of temporary network outages.

14. A method of registering one or more assets in one or more locations, the method comprising:
receiving, at a registry service, one or more beacons multicast by the one or more assets, the one or more beacons comprising one or more data;
receiving, at the registry service, one or more URIs associated with the one or more assets;
verifying, by the registry service, the one or more assets by calling to the one or more URIs upon receiving the one or more beacons;
facilitating, by the registry service, communication between the one or more assets by providing the one or more data to a requesting resource, wherein the communication comprises a token-based authentication; and
creating, by the registry service, one or more tunnels between the one or more locations to facilitate communication between one or more assets in different of the one or more locations.

15. The method of claim 14, wherein the creating further comprises creating a proxy client in each tunnel to communicate with the one or more assets that are local and creating a proxy server configured to communicate with all proxy clients via tunnels and to communicate with the one or more assets that are not local.
